# EUROPÄISCHE PATENTSCHRIFT

(11) **EP 2 172 657 B1**
(45) Veröffentlichungstag und Bekanntmachung des Hinweises auf die Patenterteilung: **16.11.2016**
(21) Anmeldenummer: 09011696.3
(22) Anmeldetag: 12.09.2009
(51) Int. Cl.: F15D 1/02

(54) **Strömungsrichter für ein Durchflussmessgerät, insbesondere ein Ultraschallmessgerät**
Flow aligner for a flow measuring device, in particular an ultrasound measuring device
Guide d'écoulement pour un appareil de mesure du débit, notamment un appareil de mesure à ultrasons

(30) Priorität: 02.10.2008 DE 102008049891
(43) Veröffentlichungstag der Anmeldung: 07.04.2010
(73) Patentinhaber: Diehl Metering GmbH, 91522 Ansbach (DE)
(72) Erfinder: Sonnenberg. Hans-Michael, 90616 Neuhof (DE)
(74) Vertreter: Blaumeier, Jörg

(56) Entgegenhaltungen:
- EP-A2- 1 217 339
- DE-A1- 3 239 770
- DE-A1-102004 053 673
- US-A- 4 365 518

## Beschreibung

Die Erfindung betrifft einen Strömungsrichter für ein Durchflussmessgerät, insbesondere ein Ultraschallmessgerät, der in ein Strömungsrohr vor oder im Durchflussmessgerät einzusetzen ist, durch das das zu messende Fluid mit einer Hauptströmungsrichtung strömt.

Bei der Aufnahme von Messinformationen aus einem strömenden Fluid, beispielsweise Wasser, mittels eines Durchflussmessgeräts wie eines Ultraschallzählers oder auch eines Einstrahl- oder Woltman-Zählers hat das Einströmprofil des Fluids in den Bereich der Messdatenerfassung einen nicht unerheblichen Einfluss auf die Messgenauigkeit. Die Messgenauigkeit ist aber eines der zentralen Merkmale eines solchen Geräts, sie soll so exakt wie möglich sein. Bei Untersuchungen hat sich herausgestellt, dass eine der zentralen Ursachen für eine Messungenauigkeit bei einem ungestörten Strömungsprofil der Bereich des Umschlags zwischen einer laminaren und einer turbulenten Strömung in einem schmalen Strömungsbereich ist. Dabei ist im Wesentlichen die Kernströmung für den Messeffekt des Zählers verantwortlich. Bei einem ungestörten Strömungsprofil, wenn dies also unverwirbelt ist, kommt es zu einem relativ schnellen, teilweise abrupten Wechsel von einem "rechteckigen" Turbulenzprofil zu einem parabelförmigen Laminarprofil, welches eine überproportionale Erhöhung der Kernströmung zur Folge hat. Hieraus resultieren Unterschiede in der Strömungsgeschwindigkeit, die letztlich zu den Messungenauigkeiten führen. Gerade bei modernen Zählerausgestaltungen, wie beispielsweise einem U-strahlförmigen Ultraschallzähler, bei denen die Strömung kaum noch Ablenkungen erfährt, werden für diese Strömungsphänomene besonders empfindlich.

Um das laminare Strömungsprofil bzw. die laminare Strömung zur Vermeidung der Messungenauigkeiten zu "zerstören", ist es bekannt, Strömungsrichter oder Verwirbelungselemente einzusetzen. Ein solcher ist beispielsweise in EP 1 775 560 A2 beschrieben. Dort sind an einem Außenring des Strömungsrichters nach innen vorspringende, kurze propellerartig gewundene Vorsprünge vorgesehen, so dass sie in einem Winkel zur Hauptströmungsrichtung stehen. Hierdurch erfährt die Strömung eine Ablenkung, sie wird verwirbelt. Dies ist jedoch gerade bei höheren Strömungsgeschwindigkeiten problematisch, da hieraus ein hoher Strömungswiderstand resultiert und Sekundärströmungen entstehen, die sich wiederum negativ auf die Messgenauigkeit auswirken.

Aus der Druckschrift DE 32 39 770 A1 ist eine Ultraschallvorrichtung mit einer Messstrecke bekannt, in der in axialem Abstand voneinander mindestens zwei Einbauteile angeordnet sind. Durch diese wird das Geschwindigkeitsprofil des hindurchströmenden Mediums so beeinflusst, dass im überwiegenden Teil des Arbeitsbereichs die über den Weg des Ultraschallsignals gemittelte Strömungsgeschwindigkeit im Wesentlichen nur von der über den Rohrquerschnitt gemittelten Geschwindigkeit abhängig ist. Hierzu kann das Einbauteil zumindest im Bereich der Mittelachse des Messrohrs eine Sperrfläche aufweisen. Diese kann beispielsweise gleichmäßig im Winkel versetzte Arme oder mehrere konzentrische Ringe als Sperrflächenabschnitte aufweisen.

Eine Vorrichtung zur Bestimmung und/oder Überwachung des Volumen- und/oder Massendurchflusses eines Mediums ist aus der Druckschrift DE 10 2004 053 673 A1 bekannt. Um ein mehrkanaliges Ultraschall-Durchflussmessgerät bereitzustellen, ist zumindest ein Reflektorelement im Innenraum eines Messrohrs vorgesehen. Beispielsweise können rohrförmige Reflektorelemente konzentrisch in dem Messrohr angeordnet sein. Eine Befestigung an der Innenwand des Messrohrs kann über Stege erfolgen.

Der Erfindung liegt damit das Problem zugrunde, einen Strömungsrichter anzugeben, der eine Erhöhung der Messgenauigkeit insbesondere im Übergangsbereich von laminarer zu turbulenter Strömung zulässt, ohne die Nachteile zu besitzen, welche typischerweise bei höheren Strömungsgeschwindigkeiten entstehen.

Zur Lösung dieses Problems ist ein Strömungsrichter der eingangs genannten Art vorgesehen, umfassend mehrere Stege, die jeweils zueinander parallele und in der Montagestellung parallel zur Hauptströmungsrichtung des zu messenden Fluids verlaufende Flächen aufweisen, wobei die Stege derart angeordnet sind, dass in der Montagestellung der Strömungsquerschnitt des fluidführenden Strömungsrohrs in mehrere Teilquerschnitte unterteilt wird, wobei zumindest ein Teil der Teilquerschnitte unterschiedlich groß ist, so dass ein unterschiedliches Verhalten bei laminarer und turbulenter Strömung verursacht wird, wobei es bei laminarer Strömung infolge der unterschiedlichen Teilquerschnitte zu unterschiedlichen Strömungsgeschwindigkeiten kommt, die das laminare Profil nach dem Strömungsrichter auflösen. Bei Verwendung eines geraden Strömungsrohres ist die Rohrrichtung auch die Hauptströmungsrichtung, so dass bei solchem Aufbau eines Zählers die Flächen der Stege parallel zur Rohrachse stehen.

Vorteilhaft ist eine unsymmetrische Steganordnung vorgesehen, die so gewählt ist, dass der Strömungsquerschnitt in mehrere, im Querschnitt gesehen geschlossene, Teilquerschnitte unterteilt wird. Die Steganordnung ist dabei so getroffen, dass sich die Teilquerschnitte in ihrer Größe und/oder in ihrer Form unterscheiden. Wichtig bei dieser asymmetrischen Anordnung ist, dass die Reynold-wirksamen geometrischen Abmessungen unterschiedlich sind. Die Stege selbst sind, gesehen in der Hauptströmungsrichtung, länger als breit ausgeführt. Die unterschiedlichen großen Teilquerschnitte verursachen nun vorteilhaft ein unterschiedliches Verhalten bei laminarer und turbulenter Strömung, da durch die Reynold-wirksamen Abmessungen die Teilquerschnitte bei unterschiedlicher Strömungsgeschwindigkeit ihren Umschlagpunkt von laminar zu turbulent haben. Bei turbulenter Strömung bleibt die querschnittlich gesehene Geschwindigkeitsverteilung in kleinen und großen Teilquerschnitten annähernd gleich, das heißt, das Fluid kann ohne Entstehung störender Sekundärströmungen den Strömungsrichter passieren. Bei laminarer Strömung, also bei geringerem Durchfluss, kommt es jedoch infolge der unterschiedlichen Teilquerschnitte zu unterschiedlichen Strömungsgeschwindigkeiten, das heißt, das Fluid durchströmt nicht mehr gleichmäßig den Strömungsrichter, da die Teilquerschnitte mit kleineren Geometrien überproportional weniger Fluid durchlassen. Im Bereich kleinerer Teilquerschnitte bilden sich kleinere Strömungsgeschwindigkeiten aus als bei größeren Teilquerschnitten. Es kommt also zu lokal unterschiedlichen Strömungsgeschwindigkeiten, die das laminare Profil nach dem Strömungsrichter auflösen. Dies resultiert daraus, dass infolge der parallelen Stegflächen bei kleineren Geometrien der Bereich der Wandströmung überwiegt und bei größeren Geometrien die mittlere Hauptströmung überwiegt. Im Endeffekt bilden sich also, gesehen über den Gesamtquerschnitt, unterschiedliche teilquerschnittsbezogene Strömungsprofile mit unterschiedlichen Durchflussmengen bzw. Strömungsgeschwindigkeiten aus. Dies führt dazu, dass es zu einer Verwirbelung des laminaren Strömungsprofils bzw. der laminaren Strömung kommt, während eine turbulente Strömung die Stege respektive den Strömungsrichter nahezu ungestört passieren kann. Infolge der parallelen Steg- bzw. Flächenausrichtung ergibt sich auch a) kein nennenswerter Druckverlust und es werden b) keine sekundären Querströmungen induziert, wie bei vergleichbaren Systemen aus dem Stand der Technik, wie einleitend beschrieben. Würden die Stege nicht derart angeordnet, dass sich wie erfindungsgemäß vorgesehen die unterschiedlich großen Teilquerschnitte ergeben, so käme es z. B. durch eine gleichmäßige Anordnung nicht zu einer über den gesamten Strömungsquerschnitt gesehen lokal unterschiedlichen Strömung bzw. zu lokal unterschiedlichen querschnittsbezogenen Durchflüssen, da alle Teilquerschnitte und die über sie definierten Durchflüsse respektive dahinter ausgebildeten Strömungsprofile annähernd gleich wären. Es kommt folglich zu keinen Strömungsunterschieden hinter dem Strömungsrichter und folglich nicht zu der mit dem erfindungsgemäßen Strömungsrichter möglichen Auflösung der laminaren Strömung.

Wie bereits beschreiben, sind vorteilhaft die Stege gesehen in der Hauptströmungsrichtung länger als breit. Dies bewirkt zum einen, dass möglichst schmale, flächenmäßig kleine Anströmflächen an den Stegstirnseiten gegeben sind, während andererseits relativ lange parallel zur Hauptströmungsrichtung liegende Führungsflächen für die Strömung gegeben sind, welche eine induzierte Querströmung verhindert, die für die Ausbildung des laminaren bzw. statischen Strömungsanteils bei laminarer Strömung verantwortlich sind und über die unter anderem die unterschiedlichen teilquerschnittsbezogenen Strömungsgeschwindigkeiten bzw. Durchflussmengen definiert werden. Um den Widerstand beim Anströmen noch weiter verringern zu können, ist es zweckmäßig, wenn die Stege an ihrer Anströmseite eine Fase oder eine Rundung aufweisen, also leicht angeschrägt oder angerundet ausgeführt sind.

Eine besonders vorteilhafte Weiterbildung der Erfindung sieht vor, die Stege in zwei oder mehreren hintereinander liegenden Querschnittsebenen anzuordnen, wobei dies bezogen auf die Hauptströmungsrichtung gilt. Das heißt, dass die Stege aus den beiden Ebenen, die vorzugsweise unmittelbar hintereinander liegen, zusammenwirken und die Aufteilung bzw. Verwirbelung der laminaren Strömung bewirken. Dabei sieht eine besonders vorteilhafte Weiterbildung der Erfindung vor, dass die in hintereinander liegenden Ebenen angeordneten Stege zumindest abschnittsweise parallel zueinander verlaufen. Diese Ausgestaltung führt zu einer Art "Treppenausbildung". Beispielsweise befindet sich ein in Abströmungsrichtung gesehen in der vorderen Ebene angeordneter Steg etwas näher zur Rohrmitte als ein in der dahinterliegenden zweiten Ebene befindlicher Steg, der quasi versetzt zum ersten Steg ist, letztlich eben nach Art einer Treppe oder Stufe. Hieraus resultiert, dass sich abwechselnd schmale und breite Schlitze ausbilden lassen, definiert über die hintereinander angeordneten Stege der beiden Ebenen, wobei durch die breiteren Schlitze ein größerer Durchfluss möglich ist als durch die schmalen Schlitze, die sogar so gestaltet werden können, dass sich infolge des statischen Strömungsanteils nur ein minimaler Durchfluss ergibt. Infolge der unterschiedlichen querschnitts- oder hier schlitzbezogenen Durchflüsse ergibt sich wiederum eine gute Verwirbelung hinter dem Strömungsrichter. Darüber hinaus kann über diese "Treppenausbildung" auch eine Beeinflussung der Strömungsrichtung erfolgen. Denn die Stege lenken die Strömung letztlich entsprechend der Richtung der "Treppenausbildung" ab, was einen zusätzlichen Verwirbelungseffekt mit sich bringt.

Um diesen zusätzlichen Verwirbelungseffekt noch weiter zu verbessern sieht eine Weiterbildung der Erfindung vor, dass die Stege in ihrem mittleren Bereich parallel zueinander verlaufen und die daran angrenzenden Stegabschnitte zweier hintereinander liegende Stege gewinkelt zueinander verlaufen. Mit dieser Steggeometrie ergeben sich zum Rand des Strömungsrichters respektive zum Rand des Strömungsrohrs hin andere Ablenkrichtungen, da sich der Stegabstand ändert, das heißt, ein Steg der vorderen Ebene nähert sich einem Steg der hinteren Ebene oder beide Stege laufen auseinander. Dies führt dazu, dass infolge dieser gewinkelten Stegführung randseitig ein Strömungsdrall erfolgt, der als zusätzlicher Ablenk- oder Beeinflussungseffekt genutzt wird, es kommt also mithin zu einer Art randseitiger Wirbelbildung.

Grundsätzlich besteht die Möglichkeit, die Stege in den Strömungsrichter außenseitig begrenzenden Ring anzuordnen und quasi ohne zentrale, mittige Halterung am Ring mit beiden Enden anzubinden. Denkbar ist es aber auch, wenigstens einen im Wesentlichen senkrecht zu den zueinander parallelen Stegen oder Stegabschnitten verlaufenden Haltesteg vorzusehen, an dem die Stege oder Stegabschnitte angebunden sind. Dieser beispielsweise in der Mitte angeordnete oder durch die Mitte laufende Haltesteg ist ebenfalls gesehen in Hauptströmungsrichtung länger als breit, er trägt gleichermaßen zur Beeinflussung des Strömungsprofils respektive der Strömung bei, indem er natürlich ebenfalls teilquerschnittsbildend ist. Auch der Haltesteg kann an der angeströmten Seite und/oder der gegenüberliegenden Seite zumindest abschnittsweise eine unter einem Winkel <90° zur Hauptströmungsrichtung laufende Schrägfläche aufweisen.

Alternativ zur Ausbildung gerader oder gewinkelter Stege mit geradem Abschnitt besteht auch die Möglichkeit, dass zumindest ein Teil der Stege als an wenigstens einem Haltesteg angebundene konzentrische Kreise ausgebildet sind. Hier kommen also beispielsweise zwei kreisförmige oder ringförmige Stege zum Einsatz, die entweder in einer gemeinsamen Ebene liegen, oder in Hauptströmungsrichtung leicht versetzt hintereinander angeordnet sind. Über den Haltesteg in Verbindung mit den unterschiedlichen Kreis- oder Ringradien können wiederum unterschiedliche Teilquerschnitte ausgebildet werden, so dass sich die erfindungsgemäßen Wirkungen und Vorteile ergeben.

Eine weitere Erfindungsalternative sieht vor, dass die Stege gerade oder gebogen geformt und an wenigstens einem Haltesteg angebunden sind, wobei die geraden Stege unter einem beliebigen Winkel >0° und <180° zum Haltesteg stehen. Hier ist also keine Parallelität der Stege oder Stegabschnitte vorgesehen respektive Voraussetzung, vielmehr können die Stege beliebig an einem Haltesteg angeordnet und unter beliebigen Winkeln von diesem beispielsweise zum Außenring laufen, wobei auch gebogene Stege, die einen Kreisbogen beschreiben, ausgebildet sein können.

Wie bereits beschrieben besteht grundsätzlich die Möglichkeit, die Stege in einem den Strömungsrichter außenseitig begrenzenden Ring aufzunehmen. Alternativ dazu ist es auch möglich, die Stege randseitig über zwei einander gegenüberliegend angeordnete kreisförmige Randstege zu fixieren. Der Strömungsrichter liegt also nur über diese kreisabschnittsförmigen Randstege an der Rohrinnenwand an, der restliche seitliche Abschluss kann beispielsweise über gerade Stege erfolgen, die die beiden einander gegenüberliegenden Randstege verbinden, und die wiederum mit der benachbarten Rohrwand einen Teilquerschnitt bilden.

Schließlich ist es als Alternative auch möglich, dass randseitig gerade Stege vorgesehen sind, die sich zu einer Rechteckform ergänzen, und die in der Montagestellung über Anlageabschnitte an dem Strömungsrohr abgestützt sind. Auch hier werden über diese Randstege wiederum Teilquerschnitte in Verbindung mit der Rohrinnenwand ausgebildet.

Eine weitere Alternativausgestaltung ist dadurch denkbar, dass die Stege frei enden und in der Montagestellung mit ihren Enden an dem Strömungsrohr anliegen. Hier sind also weder ein Außenring noch kreisringförmige Randstege vorgesehen, vielmehr laufen die Stege, die beispielsweise an einem oder zwei Haltestegen angeordnet sind, mit ihren Enden frei aus. In der Montagestellung liegen sie mit ihren Enden an der Strömungsrohrinnenwand an, worüber wiederum die Teilquerschnitte geschlossen respektive ausgebildet werden.

Der Strömungsrichter selbst ist bevorzugt ein Kunststoffspritzteil, was eine einfache Herstellung ermöglicht. Bevorzugt ist er an einem der Durchflussmessung dienenden Rohreinsatz, insbesondere einem Reflektorhalter eines Ultraschallgeräts, angeordnet. Dies ist entweder dadurch möglich, dass der Strömungsrichter als separates Bauteil über eine Rastverbindung am Rohreinsatz angesteckt ist. In diesem Fall sind entsprechende Rastabschnitte am Strömungsrichter und am Rohreinsatz vorgesehen. Besonders zweckmäßig ist es jedoch, den Strömungsrichter als integralen Teil an dem Rohreinsatz, der ebenfalls aus Kunststoff gefertigt ist, anzuspritzen, mithin also bei der Spritzherstellung des Rohreinsatzes den Strömungsrichter mit auszubilden.

Neben dem Strömungsrichter selbst betrifft die Erfindung ferner ein Durchflussmessgerät, insbesondere ein Ultraschallmessgerät mit einem Strömungsrohr, durch das das zu messende Fluid mit einer Hauptströmungsrichtung strömt, sowie mit wenigstens einem im Strömungsrohr eingesetzten Strömungsrichter der zuvor beschriebenen Art.

Zudem betrifft die Erfindung ein Verfahren zur Richtung einer Strömung mit einem Strömungsrichter, der in ein Strömungsrohr vor oder in einem Durchflussmessgerät eingesetzt ist, durch das ein zu messendes Fluid mit einer Hauptströmungsrichtung geführt wird, wobei der Strömungsquerschnitt des fluidführenden Strömungsrohrs durch mehrere Stege des Strömungsrichters, die jeweils zueinander parallele und in der Montagestellung parallel zur Hauptströmungsrichtung des zu messenden Fluids verlaufende Flächen aufweisen, in mehrere, durch die Stege separierte Teilquerschnitte unterteilt wird, wobei zumindest ein Teil der Teilquerschnitte unterschiedlich groß ist, so dass ein unterschiedliches Verhalten bei laminarer und turbulenter Strömung verursacht wird, wobei es bei laminarer Strömung infolge der unterschiedlichen Teilquerschnitte zu unterschiedlichen Strömungsgeschwindigkeiten kommt, die das laminare Profil nach dem Strömungsrichter auflösen.

Weitere Vorteile, Merkmale und Einzelheiten der Erfindung ergeben sich aus dem im Folgenden beschriebenen Ausführungsbeispielen sowie anhand der Zeichnungen. Dabei zeigen:
- Fig. 1: eine Prinzipdarstellung, teilweise im Schnitt, eines erfindungsgemäßen Durchflussmessgeräts mit einem Rohreinsatz mit daran angeordnetem Strömungsrichter,
- Fig. 2: eine Prinzipdarstellung eines Strömungsrichters einer ersten Ausführungsform,
- Fig. 3: eine Längsschnittansicht durch den Strömungsrichter aus Fig. 2,
- Fig. 4: eine Prinzipdarstellung eines erfindungsgemäßen Strömungsrichters einer zweiten Ausführungsform,
- Fig. 5: eine Perspektivansicht des Strömungsrichters aus Fig. 4,
- Fig. 6a, 6b: zwei Längsschnittansichten durch den Strömungsrichter aus Fig. 4 in Richtung der Linien VIa - VIa bzw. VIb - VIb,
- Fig. 7: eine Perspektivansicht eines weiteren erfindungsgemäßen Strömungsrichters,
- Fig. 8: eine Perspektivansicht einer Ausführungsform eines erfindungsgemäßen Strömungsrichters mit ringförmigen Stegen,
- Fig. 9: eine Längsschnittansicht des Strömungsrichters aus Fig. 8,
- Fig. 10: eine weitere Ausführungsform eines erfindungsgemäßen Strömungsrichters,
- Fig. 11: eine Perspektivansicht eines Rohreinsatzes, wie in Fig. 1 gezeigt, mit einem daran angeordneten Strömungsrichter einer weiteren Ausführungsform,
- Fig. 12: eine Darstellung der Teilquerschnitte des Strömungsrichters aus Fig. 11,
- Fig. 13: eine weitere erfindungsgemäße Ausführungsform,
- Fig. 14: ein Messdiagramm zur Darstellung der Messabweichungen ohne Einsatz eines Strömungsrichters, und
- Fig. 15: ein Messdiagramm mit Einsatz eines Strömungsrichters.

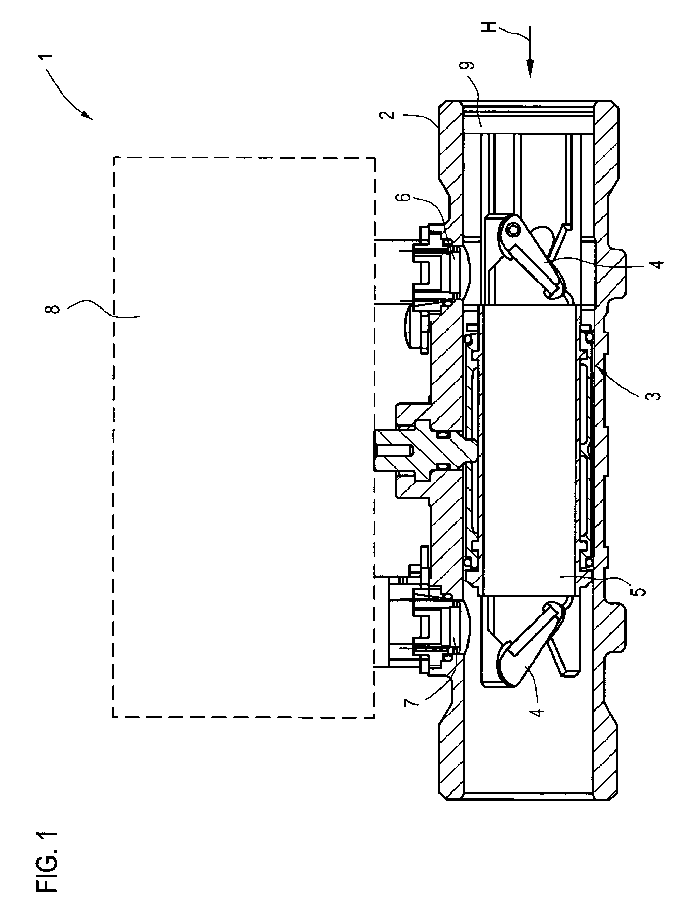

Fig. 1 zeigt ein erfindungsgemäßes Durchflussmessgerät 1, hier in Form eines Ultraschallmessgeräts, umfassend ein Strömungsrohr 2, durch das ein zu vermessendes Fluid mit einer Hauptströmungsrichtung, wie durch den Pfeil H dargestellt, strömt. Vorgesehen ist ein Rohreinsatz 3 umfassend zwei Aufnahmen 4 für Reflektoren, die der Reflexion von eingekoppelten, durch ein Messrohr 5 geführten Ultraschallwellen dienen. Die Ultraschallwellen werden über einen ersten Ultraschallwandler 6 erzeugt und nach Durchgang durch das Messrohr 5 und damit durch das Fluid von einem zweiten Ultraschallwandler 7 empfangen. Eine nachgeschaltete, hier nur gestrichelt gezeigte Auswerteelektronik 8 ermittelt das über eine nicht näher gezeigte Anzeigeeinrichtung oder Übertragungseinrichtung etc. ausgegebene Messergebnis. Der grundsätzliche Aufbau eines solchen Ultraschallzählers ist bekannt und muss nicht näher erläutert werden.

Am Eingang des Strömungsrohrs 2 ist ein Strömungsrichter 9 vorgesehen, der der Strömungsverwirbelung dient.

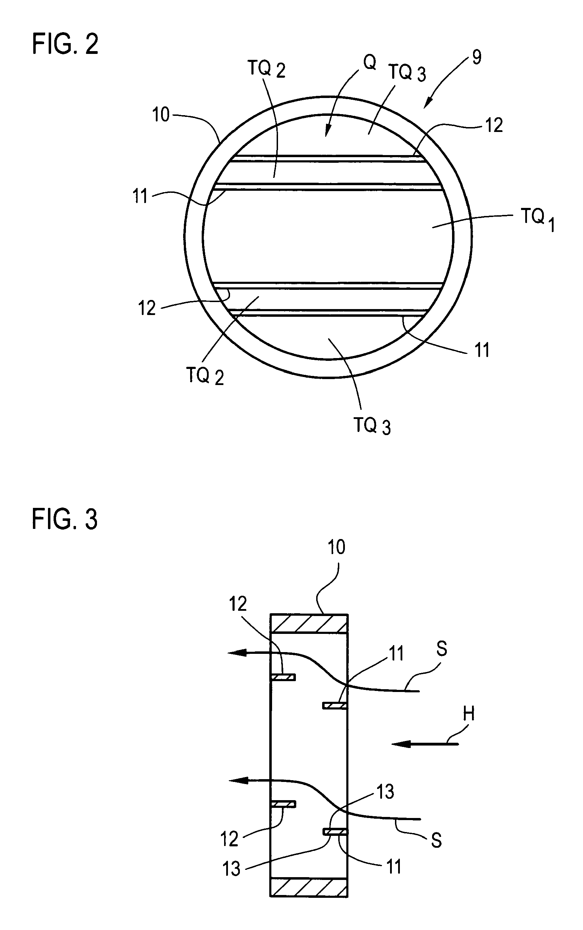

Fig. 2 zeigt eine erste Ausführungsform eines solchen Strömungsrichters 9. Dieser weist einen ihn außenseitig begrenzenden Ring 10 auf, in dem im gezeigten Beispiel mehrere geradlinig verlaufende Stege 11, 12 vorgesehen sind, wobei die Stege 11, siehe Fig. 3, in einer ersten Ebene und die Stege 12 in einer zweiten Ebene angeordnet sind. Die Stege 11, 12 verlaufen parallel zueinander, sie sind jeweils, gesehen in Hauptströmungsrichtung H, länger als breit. Jeder Steg weist parallele seitliche Flächen 13 auf, die parallel zur Hauptströmungsrichtung H verlaufen.

Ersichtlich sind die Stege 11, 12 derart angeordnet, dass sie zusammenwirkend den gesamten Strömungsquerschnitt Q in unterschiedlich große Teilquerschnitte TQ aufteilen. Die beiden mehr zur Mitte angeordneten Stege 11, 12 bilden einen ersten Teilquerschnitt TQ₁, der größer ist als die zwischen jeweils einem mehr mittig befindlichen Steg 11 bzw. 12 und dem in der jeweils anderen Ebene benachbarten Steg 11, 12 ausgebildeten weiteren Teilquerschnitte TQ₂. Zwei dritte Teilquerschnitte TQ₃ werden über die jeweils außenliegenden Stege 11 bzw. 12 und die Innenwand des äußeren Rings 10 realisiert. Insgesamt sind hier also drei unterschiedlich große Teilquerschnitte TQ₁, TQ₂ und TQ₃ realisiert.

Des Weiteren ist die Steganordnung, siehe Fig. 3, quasi treppenförmig, das heißt, bezogen auf die hier gezeigte horizontale Steganordnung, dass die Stege 11 und 12, die benachbart zueinander in den beiden Ebenen angeordnet sind, gesehen aus der Hauptströmungsrichtung H bei horizontalem Stegverlauf (der zur Definition der treppenartigen Ausgestaltung herangezogen wird, selbstverständlich aber die Stege ganz grundsätzlich in beliebiger Orientierung verlaufen können) quasi ansteigen. Dies führt dazu, dass die Strömung S, wie durch die beiden Pfeile in Fig. 3 angedeutet ist, quasi eine Ablenkung nach "oben", also über die Treppenstufenausbildung erfährt.

Infolge der unterschiedlich großen Teilquerschnitte TQ₁ - TQ₃ kommt es nun dazu, dass sich im Falle einer laminaren Strömung im jeweiligen Teilquerschnitt TQ unterschiedliche Durchflüsse ergeben. Je kleiner ein Teilquerschnitt TQ ist, umso kleiner ist der Durchfluss, nachdem infolge der relativ großen, parallelen Flächen 13 jedes der Stege 11, 12 ein relativ hoher statischer Strömungsanteil bezogen auf den kleinen Teilquerschnitt TQ gegeben ist. Das heißt, dass durch die Teilquerschnitte TQ₂ deutlich weniger Fluid hindurchströmt als durch die größeren Teilquerschnitte TQ₁ und TQ₃. Dies führt dazu, dass sich hinter dem Strömungsrichter lokal gesehen unterschiedliche Strömungen respektive Strömungsgeschwindigkeiten einstellen, was wiederum dazu führt, dass die ursprüngliche laminare Strömung zerstört wird und es zu einer Verwirbelung kommt. Dieser Verwirbelung zuträglich ist die "Treppenausbildung", da über sie die Strömung zusätzlich eine Richtungskomponente erhält, die die Verwirbelung unterstützt.

Die Ausgestaltung kann dabei so derart sein, dass bei laminarer Strömung durch die kleinen Teilquerschnitte TQ₁ kein Durchfluss mehr gegeben ist, wenn also die hintereinander liegenden Stege so eng gesetzt sind, dass der statische Strömungsanteil dominiert und das Fluid nahezu vollständig durch die größeren Teilquerschnitte strömt.

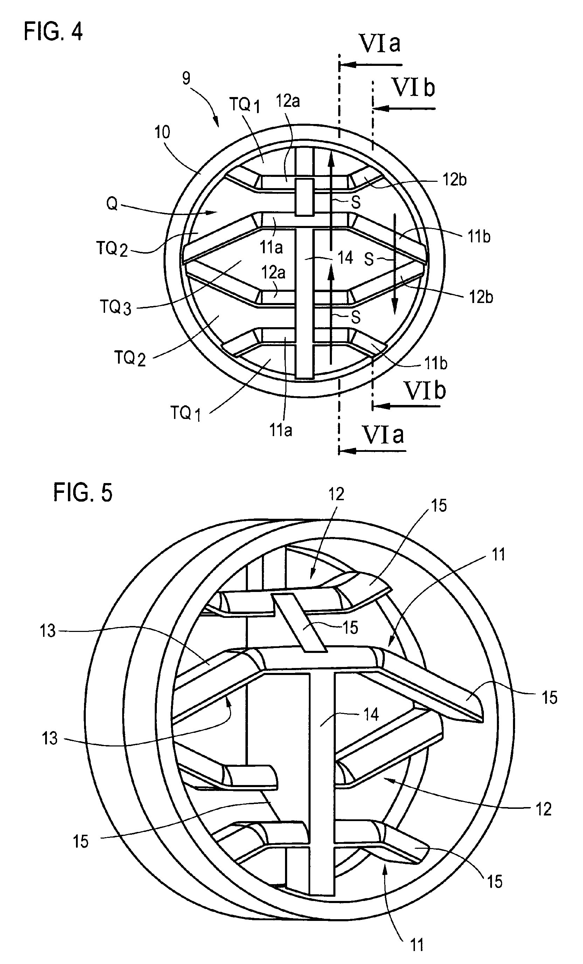

Die Fig. 4 - 6b zeigen eine weitere Ausführungsform eines erfindungsgemäßen Strömungsrichters 9, wobei soweit möglich für gleiche Bauteile die gleichen Bezugszeichen verwendet werden. Auch hier ist ein äußerer Ring 10 vorgesehen, in dem wiederum in zwei versetzten Ebenen Stege 11, 12 angeordnet sind. Die Stege 11, 12 sind jeweils in den mittleren Stegabschnitten 11a, 12a parallel zueinander angeordnet, während die randseitigen Stegabschnitte 11 b, 12b dazu abgewinkelt verlaufen. Ersichtlich laufen die Stegabschnitte 11 b und 12b der beiden mittigen Stege 11, 12 aufeinander zu (siehe Fig. 4), während die Stegabschnitte 11b, 12b der randseitigen Stegpaare 11, 12 voneinander weglaufen. Auch hier wird der gesamte Strömungsquerschnitt Q in eine Vielzahl einzelner Teilquerschnitte TQ₁, TQ₂, TQ₃ unterteilt. Die Querschnittunterteilung erfolgt zusätzlich über einen Haltesteg 14, an dem alle Stege 11, 12 angebunden sind. Die links und rechts vom Haltesteg ausgebildeten Teilquerschnitte sind spiegelbildlich zueinander, dies gilt auch für die quasi vertikal gesehenen Teilquerschnitte, das heißt, dass auch die oberen und unteren Teilquerschnitte TQ₁ gleichgroß sind, Entsprechendes gilt für die Teilquerschnitte TQ₂.

Nachdem auch hier die Stege 11, 12 länger als breit sind, kommt es auch bei dieser Ausgestaltung infolge der unterschiedlich großen Teilquerschnitte zu einer Verwirbelung der laminaren Strömung. Zusätzlich sind hier die Anströmflächen 15 aller Stege 11, 12 angeschrägt oder angerundet, was den Strömungswiderstand erniedrigt und der Strömung eine zusätzliche Richtungskomponente verleiht.

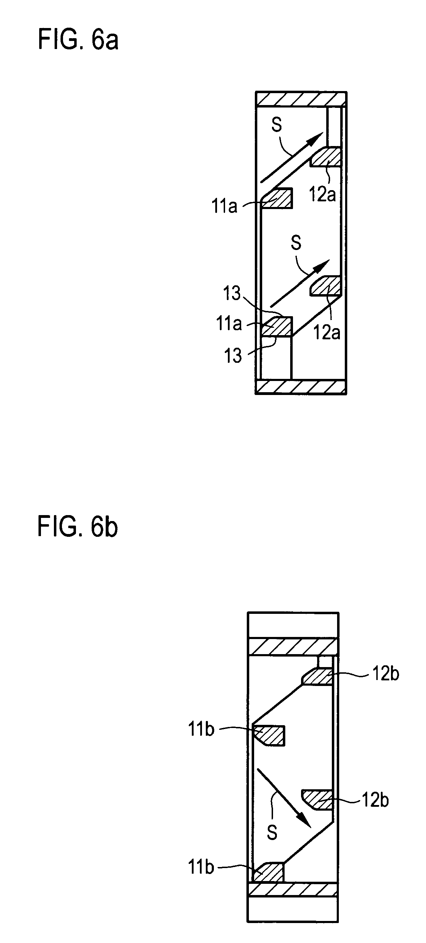

Auch hier ergibt sich wiederum eine "Treppenausbildung", wobei diese sich aber über den Querschnitt gesehen lokal verändert. Die Fig. 6a und 6b zeigen Schnittansichten durch unterschiedliche Ebenen VIa und VIb. Fig. 6a zeigt eine Schnittansicht durch den Bereich der parallelen Stegabschnitte 11a, 12a. Ersichtlich bilden sich hier quasi zwei Treppenausgestaltungen aus, die die Strömung S in Fig. 6a "nach oben" führen, mithin also eine Richtungskomponente in Richtung der Rohrinnenwand verleihen.

In der Schnittebene durch die Stegabschnitte 11 b, 12b (Fig. 6b) ergibt sich nur eine "Treppenausgestaltung" durch die mittleren Stegabschnitte 11 b, 12b. Dort wird die Strömung S "nach unten" geführt. Es ergibt sich also innerhalb einer Strömungsrichterhälfte im mittleren Bereich eine "nach oben" gerichtete und eine "nach unten" Strömungsablenkung, mithin also eine Art Zirkulation, wie durch die Pfeile S in Fig. 4 gezeigt ist. Diese Zirkulation ist in der linken Strömungsrichterhälfte gegenläufig, so dass sich letztlich zwei gegenläufige Verwirbelungen oder Wirbel ausbilden.

Wie Fig. 5 zeigt, ist die Anströmkante des Haltestegs 14 mit einer Schrägfläche 15 versehen, Entsprechendes gilt auch für die gegenüberliegende Kante des Haltestegs 14. Hierüber erfolgt ebenfalls eine Strömungsführung. Die seitlichen Flächen 13 jedes Stegs sind, wie bei allen Ausführungen, jeweils parallel zueinander und parallel zur Hauptströmungsrichtung.

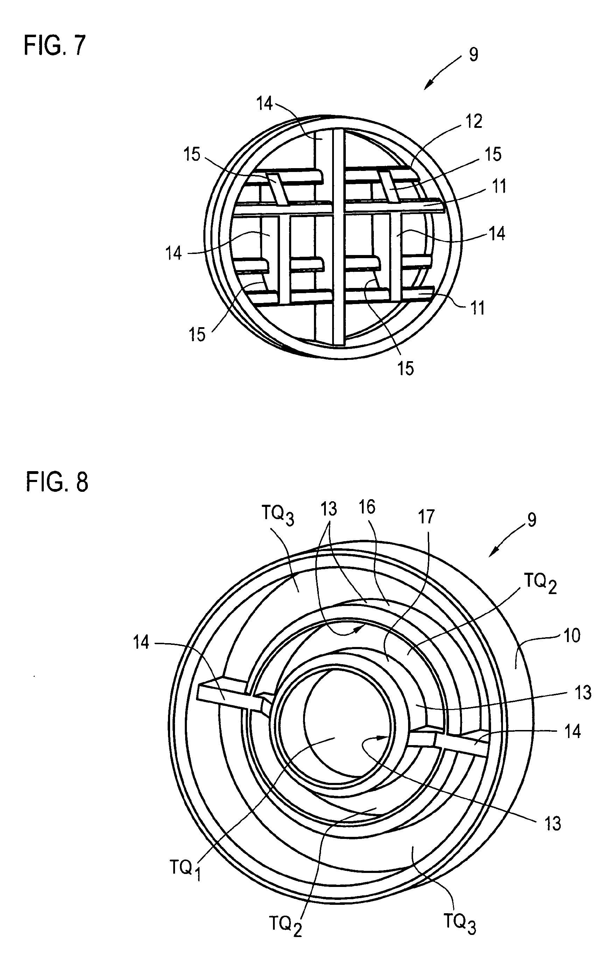

Fig. 7 zeigt eine weitere erfindungsgemäße Ausführungsform eines Strömungsrichters 9, die hinsichtlich der Anordnung der Stege 11, 12 der Ausgestaltung gemäß der Fig. 2 und 3 entspricht. Hier ist jedoch zusätzlich ein mittiger Haltesteg 14 sowie zwei versetzt dazu vorgesehene weitere Haltestege 14 vorgesehen, die Schrägflächen 15 an ihren Anströmkanten und den gegenüberliegenden Abströmkanten aufweisen, ähnlich wie der mittige Haltesteg 14 gemäß Fig. 5. Auch hier bilden sich im Querschnitt gesehen eine Vielzahl einzelner Teilquerschnitte TQ aus, wobei die Teilquerschnittsanzahl infolge der Ausbildung dreier Haltestege noch größer ist als bei den zuvor beschriebenen Ausgestaltungen, gleichwohl sich jedoch die Querschnittsflächen der einzelnen Teilquerschnitte wiederum zum Teil unterscheiden.

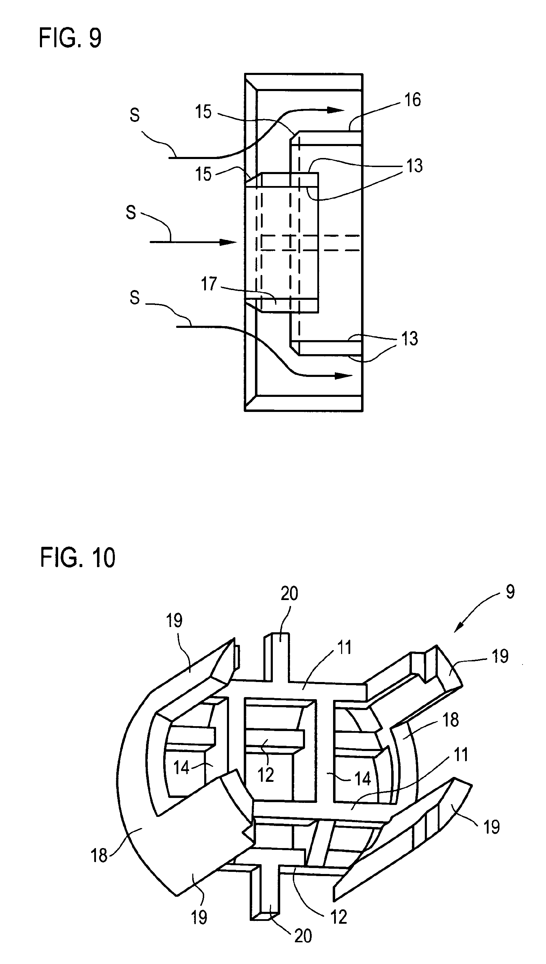

Fig. 8 zeigt eine weitere erfindungsgemäße Ausgestaltung eines Strömungsrichters 9 umfassend einen äußeren Ring 10, über den der Strömungsrichter 9 - wie alle anderen Strömungsrichter auch - an der Innenwand des Strömungsrohres 2 aus Fig. 1 anliegt. In diesem Ring 10 sind im gezeigten Beispiel zwei konzentrisch zueinander vorgesehene ringförmige Stege 16, 17 vorgesehen, die über zwei Haltestege 14 fixiert sind. Wie Fig. 9 zu entnehmen ist, sind die beiden ringförmigen Stege 16, 17 axial, also in Hauptströmungsrichtung, versetzt zueinander angeordnet, sie sind also in zwei Ebenen positioniert. Ersichtlich bilden sich auch hier wiederum eine Vielzahl unterschiedlicher Teilquerschnitte aus, nämlich ein mittiger erster Teilquerschnitt TQ₁, gefolgt von zwei ringabschnittsförmigen Teilquerschnitten TQ₂, ausgebildet zwischen den beiden ringförmigen Stegen 16, 17, denen wiederum radial weiter außen zwei Teilquerschnitte TQ₃ folgen, die die größten sind und zwischen den äußeren ringförmigen Steg 16 und dem äußeren Ring 10 gebildet sind. Auch hier sind die Anströmstirnflächen wiederum mit Schrägflächen 15 versehen, siehe Fig. 9. Es ergibt sich ersichtlich, siehe insbesondere Fig. 9, eine treppenartige Struktur, das heißt, dass die Strömung S über die axial gesehen hintereinander vorgesehenen, radial nach außen ansteigenden Stirnkanten respektive Stege 16, 17 radial nach außen geführt wird, während im mittleren Bereich die Strömung S geradlinig durchströmt. Grundsätzlich wird also auch hier zusätzlich zu der über die unterschiedlich großen Teilquerschnitte TQ₁ - TQ₃ und die daraus resultierenden unterschiedlichen Durchlassmengen respektive Strömungsgeschwindigkeiten der einzelnen teilquerschnittsbezogenen Fluidmassen resultierenden Verwirbelung auch eine aus differierenden Strömungsrichtungen resultierende Verwirbelung realisiert. Hierbei kann also der überproportionalen Erhöhung der Kernströmung des laminaren Strömungsprofils bzw. deren laminaren Strömung entgegengewirkt werden, nachdem die Strömung zur Rohrwand ablenkt wird.

Fig. 10 zeigt eine weitere Ausgestaltung eines Strömungsrichters 9, bei dem die axial gesehen versetzten Stege 11, 12 anders als bei den bisherigen Ausführungen nicht in einem vollständig geschlossenen äußeren Ring angeordnet sind, vielmehr sind hier lediglich zwei kreisabschnittsförmige Randstege 18 vorgesehen, an denen axial verlängerte Anlageabschnitte 19 vorgesehen sind, über die sich eine größerflächige Anlage an der Rohrinnenwand ergibt. Ansonsten ist der Aufbau ähnlich dem der Ausgestaltung nach Fig. 7, wobei hier jedoch lediglich zwei Haltestege 14 vorgesehen sind, während an den beiden außenliegenden Stegen 11, 12 nur kurze Stegabschnitte 20 zur Abstützung an der Rohrinnenwand vorgesehen sind.

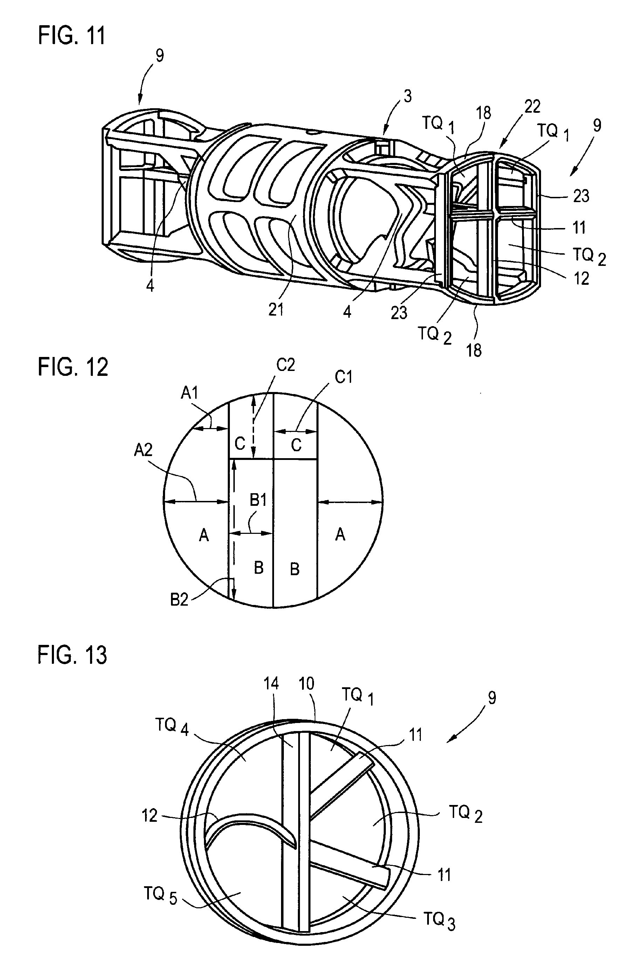

Fig. 11 zeigt schließlich einen Rohreinsatz 3, wie er bereits in Fig. 1 gezeigt wurde, in Form einer detaillierten Perspektivansicht. Gezeigt sind die beiden Reflektorhalter 4, sowie ein mittiger, zylindrischer Halteabschnitt 21, in den das Messrohr 5 eingesetzt wird. An dem Rohreinsatz 3, der als Kunststoffformteil oder Kunststoffspritzteil ausgeführt ist, integral angespritzt (alternativ auch über Rastabschnitte angeordnet) ist am Einströmende 22 ein Strömungsrichter 9, der hier zwei sich kreuzende Stege 11, 12 aufweist, wobei der Steg 11 an zwei kreisabschnittsförmigen Randstegen 18 fixiert ist, die ihrerseits randseitig über weitere Stege 23 miteinander verbunden sind. Diese weiteren Stege 23 bilden mit der benachbart liegenden Rohrinnenwand selber einen Teilquerschnitt aus, während sich aufgrund der Kreuzanordnung der Stege 11, 12, die einander nicht mittig, sondern außermittig schneiden, wiederum unterschiedlich große Teilquerschnitte TQ₁ und TQ₂ ausbilden, während benachbart zu den Randstegen 23 dritte Teilquerschnitte, die hier nicht näher gezeigt sind, ausgebildet werden. Auch diese Teilquerschnitte sind wiederum unterschiedlich groß, so dass es zu den eingangs beschriebenen vorteilhaften Verwirbelungseffekten kommt. Denkbar wäre es auch, die Stege insgesamt etwas zu einer Rohrwandseite hin zu versetzen, so dass die beiden äußeren Stege mit der jeweils benachbarten Rohrinnenwand verschieden große Teilquerschnitte bilden.

Im gezeigten Beispiel ist an der gegenüberliegenden Seite ein weiterer Strömungsrichter 9 aus Symmetriegründen vorgesehen. Dieser kann dort ausgebildet sein, muss aber nicht.

Sofern der Strömungsrichter 9 nicht einstückig am Rohreinsatz 3 angespritzt bzw. mit diesem gemeinsam hergestellt wird, ist es möglich, ihn als separates Bauteil herzustellen und am Rohreinsatz 3 anzuordnen. Hierzu sind geeignete Rast- oder Klemmabschnitte am Strömungsrichter und/oder am Rohreinsatz vorzusehen, die eine Fixierung ermöglichen. Jedoch ist eine Ausführung des Strömungsrichters als Kunststoffbauteil nicht zwingend erforderlich, es wäre auch denkbar, ihn aus Metall auszuführen.

Fig. 12 zeigt als Prinzipskizze die Strömungsquerschnitte, die mit dem Strömungsrichter aus Fig. 11 gebildet werden. Daraus sind die Reynold-wirksamen Abstände bzw. Geometrien zu erkennen. Bei einer rechteckigen Kontur sind dies Abstände meist die schmalen Seiten, also die "kurzen Breiten". Im Teilquerschnitt A ist im Bereich der Ecken der Abstand A1 kleiner als in der Mitte (Abstand A2), was dazu führt, dass im schmäleren Bereich im Verhältnis zum breiteren Bereich viel weniger Fluid durchfließt. Der Abstand A2 ist der bestimmende Abstand für den Teilquerschnitt A. Mit dem Verhältnis B1 bzw. C1 zu A2 kann die Strömung mehr mittig oder seitlich konzentriert werden (laminarer Strömungsfall). Beim Verhältnis B1/A2 = 1 gibt es keine Wirkung. Das gleiche gilt für C2 zu B2, wobei C2 stärker wirkt, da C1/C2 nahezu gleich sind. Im Allgemeinen gilt, dass bei im wesentlichen rechteckigen Teilquerschnittsgeometrien benachbarte Teilquerschnitte unterschiedliche Längen und/oder Breiten aufweisen sollen, dass sie also unterschiedliche Reynolds-wirksame Geometrien besitzen.

Weiterhin zeigt Fig. 13 eine Ausführungsform eines Strömungsrichters 9 mit einem Außenring 10 sowie einem mittigen Haltesteg 14, an dem auf der rechten Bildseite zwei Stege 11 angeordnet und zum Ring 10 geführt sind, so dass sich auf dieser Seite drei unterschiedlich große Teilquerschnitte TQ₁, TQ₂ und TQ₃ ausbilden, während auf der linken Hälfte ein gebogener Steg 12 vorgesehen ist, über den zwei weitere Teilquerschnitte TQ₄ und TQ₅ ausgebildet werden. Auch diese Stege sind wie alle anderen Stege der anderen beschriebenen Ausführungen auch länger als breit und weisen wie alle anderen Stege auch zueinander parallele und zur Hauptströmungsrichtung H parallele Seitenflächen auf. Ersichtlich stehen hier also alle Stege 11, 12 unter unterschiedlichen Winkeln zueinander respektive zum Haltesteg, so dass sich hier fünf Teilquerschnitte ergeben, die allesamt unterschiedlich groß sind. Wenngleich hier keine Treppenausbildung realisiert ist, wäre eine solche gleichwohl denkbar, indem in einer dahinter hinterliegenden Ebene leicht versetzt entsprechende parallel angeordnete zusätzliche Stege realisiert sind.

Die gezeigten Ausführungsbeispiele sind nicht abschließend vielmehr sind beliebige Variationen innerhalb des Erfindungsgedankens möglich.

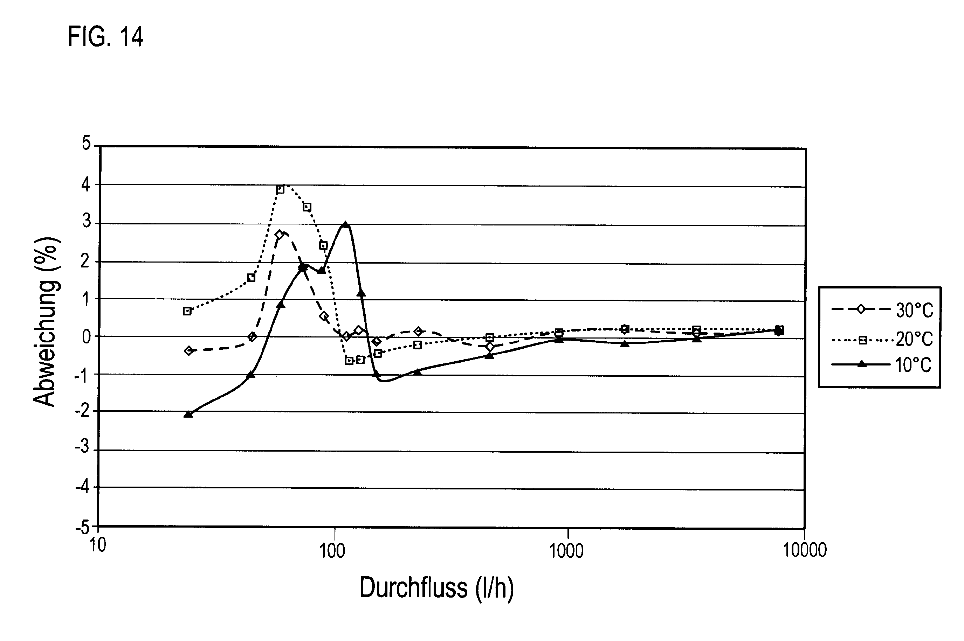

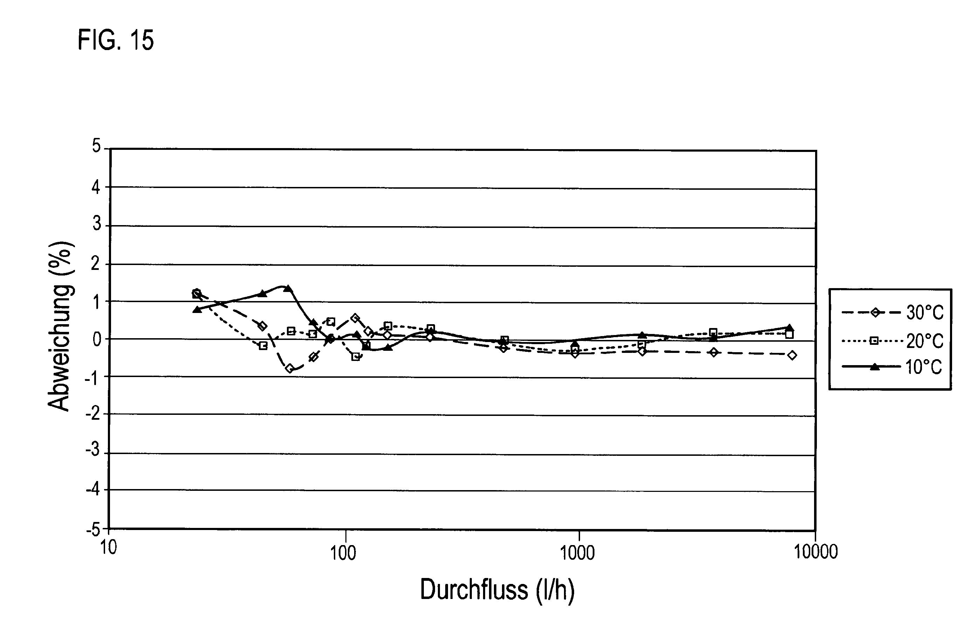

Die Fig. 14 und 15 zeigen zwei Messdiagramme, die die gegebenen Messungenauigkeiten eines Durchflussmessgeräts ohne und mit Einsatz eines erfindungsgemäßen Strömungsrichters ermittelt wurden. Zur Aufnahme der Kurven nach Fig. 14 wurde ein Rohreinsatz, wie er in Fig. 11 gezeigt ist, jedoch ohne die beiden endseitigen Strömungsrichter in ein Strömungsrohr gesetzt. Der Innendurchmesser des Messrohrs 5 betrug 16 mm, der Innendurchmesser des Strömungsrohrs, in das der Rohreinsatz gesetzt wurde, betrug 24 mm. Die Durchflussmessung erfolgte über an beiden Reflektorhalterungen angeordnete Ultraschallsensoren, die mit dem Zähler bzw. der Zählerelektronik kommunizieren. Gemessen wurde der Durchfluss von Wasser mit einer Temperatur von 10°C, 20°C und 30°C. Das Strömungsprofil wurde, da keine Strömungsrichter verwendet wurden, nicht gestört. Ersichtlich zeigen die Messkurven im Diagramm nach Fig. 14, in dem längs der Abszisse der Durchfluss und längs der Ordinate die Messabweichung aufgetragen ist, deutlich, dass größere Messungenauigkeiten insbesondere bei einem Durchfluss zwischen 50 - 200 l/h gegeben sind. Diese starken Ungenauigkeiten sind auf den Übergang von laminarer zu turbulenter Strömung zurückzuführen. Bei ungestörtem Strömungsprofil kann der Übergang von laminarer zu turbulenter Strömung auch schlagartig erfolgen, was zu unerwünschten starken Messabweichungen führen kann.

Anders gemäß Fig. 15, wo die Messkurven bei Einsatz eines Rohreinsatzes (Innendurchmesser des Messrohrs ebenfalls 16 mm) wie in Fig. 11 gezeigt dargestellt sind. Hier sind zwei Strömungsrichter vorhanden, mit denen gezielt das Strömungsprofil gestört wurde. Es zeigt sich, dass gerade im Übergangsbereich von laminarer zu turbulenter Strömung, also im Bereich niedrigerer Durchflüsse, durch die Strömungsstörung eine gravierende Verbesserung der Messgenauigkeit erreicht werden kann. Die Messgenauigkeit im Bereich größerer Durchflüsse, also im Bereich turbulenter Strömung, wird durch den Einsatz der Strömungsrichter nicht nennenswert beeinflusst.

## Patentansprüche

1. Strömungsrichter für ein Durchflussmessgerät, insbesondere ein Ultraschallmessgerät, der in ein Strömungsrohr (2) vor oder im Durchflussmessgerät einzusetzen ist, durch das das zu messende Fluid mit einer Haupt-strömungsrichtung (H) strömt, **gekennzeichnet durch** mehrere Stege (11, 12, 16, 17),
die jeweils zueinander parallele und in der Montagestellung parallel zur Hauptströmungsrichtung (H) des zu messenden Fluids verlaufende Flächen (13) aufweisen, wobei die Stege (11, 12, 16, 17) derart angeordnet sind, dass in der Montagestellung der Strömungsquerschnitt (Q) des fluidführenden Strömungsrohrs (2) in mehrere Teilquerschnitte (TQ_{1,2,3,4,5}) unterteilt wird, wobei zumindest ein Teil der Teilquerschnitte (TQ_{1,2,3,4,5}) unterschiedlich groß ist, so dass ein unterschiedliches Verhalten bei laminarer und turbulenter Strömung verursacht wird, wobei es bei laminarer Strömung infolge der unterschiedlichen Teilquerschnitte (TQ_{1,2,3,4,5}) zu unterschiedlichen Strömungsgeschwindigkeiten kommt, die das laminare Profil nach dem Strömungsrichter (9) auflösen.

2. Strömungsrichter nach Anspruch 1, **dadurch gekennzeichnet, dass** die Stege (11, 12, 16, 17) gesehen in der Hauptströmungsrichtung (H) länger als breit sind.

3. Strömungsrichter nach Anspruch 1 oder 2, **dadurch gekennzeichnet, dass** die Stege (11, 12, 16, 17) an ihrer Anströmseite eine Fase (15) aufweisen.

4. Strömungsrichter nach einem der vorangehenden Ansprüche, **dadurch gekennzeichnet, dass** die Stege (11, 12, 16, 17) in zwei oder mehreren hintereinander liegenden Querschnittsebenen angeordnet sind.

5. Strömungsrichter nach Anspruch 4, **dadurch gekennzeichnet, dass** die in hintereinander liegenden Ebenen angeordneten Stege (11, 12) zumindest abschnittsweise parallel zueinander verlaufen.

6. Strömungsrichter nach Anspruch 5, **dadurch gekennzeichnet, dass** die Stege (11, 12) in ihrem mittleren Bereich (11a, 12a) parallel zueinander verlaufen und die daran angrenzenden Stegabschnitte (11 b, 12b) zweier hintereinander liegender Stege (11, 12) gewinkelt zueinander verlaufen.

7. Strömungsrichter nach einem der Ansprüche 4 bis 6, **dadurch gekennzeichnet, dass** wenigstens ein im Wesentlichen senkrecht zu den zueinander parallelen Stegen (11, 12) oder Stegabschnitten (11 a, 12a) verlaufender Haltesteg (14), an den die Stege (11, 12) oder Stegabschnitte (11a, 12a) angebunden sind, vorgesehen ist.

8. Strömungsrichter nach Anspruch 7, **dadurch gekennzeichnet, dass** der Haltesteg (14) an der angeströmten Seite und/oder der gegenüberliegenden Seite zumindest abschnittsweise eine unter einem Winkel < 90° zur Hauptströmungsrichtung (H) verlaufende Schrägfläche (15) aufweist.

9. Strömungsrichter nach einem der Ansprüche 1 bis 4, **dadurch gekennzeichnet, dass** zumindest ein Teil der Stege (16, 17) als an wenigstens einem Haltesteg (14) angebundene konzentrische Kreise ausgebildet ist.

10. Strömungsrichter nach einem der Ansprüche 1 bis 4, **dadurch gekennzeichnet, dass** die Stege (11, 12) gerade oder gebogen geformt und an wenigstens einem Haltesteg (14) angebunden sind, wobei die geraden Stege (11) unter einem beliebigen Winkel > 0° und < 180° zum Haltesteg (14) stehen.

11. Strömungsrichter nach einem der vorangehenden Ansprüche, **dadurch gekennzeichnet, dass** die Stege (11, 12, 16, 17) in einem den Strömungsrichter (9) außenseitig begrenzenden Ring (10) aufgenommen sind.

12. Strömungsrichter nach einem der Ansprüche 1 bis 10, **dadurch gekennzeichnet, dass** die Stege (11, 12) randseitig über zwei einander gegenüberliegend angeordnete kreisabschnittsförmige Randstege (18) fixiert sind.

13. Strömungsrichter nach einem der Ansprüche 1 bis 10, **dadurch gekennzeichnet, dass** randseitig gerade Stege (23) vorgesehen sind, die sich vorzugsweise zu einer rechteckigen Form ergänzen, und die in der Montagestellung über Anlageabschnitte (18) an dem Strömungsrohr abgestützt sind.

14. Strömungsrichter nach einem der Ansprüche 1 bis 10, **dadurch gekennzeichnet, dass** zumindest ein Teil der Stege frei endet und in der Montagestellung mit ihren Enden an dem Strömungsrohr anliegen, oder dass zumindest ein Teil der Stege zusammen mit der Rohrinnenwand einen Teilquerschnitt bildet.

15. Strömungsrichter nach einem der vorangehenden Ansprüche, **dadurch gekennzeichnet, dass** er ein Kunststoffspritzteil ist.

16. Strömungsrichter nach einem der vorangehenden Ansprüche, **dadurch gekennzeichnet, dass** er an einem der Durchflussmessung dienenden Rohreinsatz (3), insbesondere einem Reflektorhalter eines Ultraschallmessgeräts, angeordnet ist.

17. Strömungsrichter nach Anspruch 16, **dadurch gekennzeichnet, dass** er über eine Rastverbindung an den Rohreinsatz (3) angesteckt oder an diesen angespritzt ist.

18. Durchflussmessgerät, insbesondere Ultraschallmessgerät, mit einem Strömungsrohr, durch das das zu messende Fluid mit einer Hauptströmungsrichtung (H) strömt, sowie mit wenigstens einem im Strömungsrohr (2) eingesetzten Strömungsrichter (9) nach einem der vorangehenden Ansprüche.

19. Verfahren zur Richtung einer Strömung mit einem Strömungsrichter (9), der in ein Strömungsrohr (2) vor oder in einem Durchflussmessgerät eingesetzt ist, durch das ein zu messendes Fluid mit einer Hauptströmungsrichtung (H) geführt wird, wobei der Strömungsquerschnitt (Q) des fluidführenden Strömungsrohrs (2) durch mehrere Stege (11, 12, 16, 17) des Strömungsrichters (3), die jeweils zueinander parallele und in der Montagestellung parallel zur Hauptströmungsrichtung (H) des zu messenden Fluids verlaufende Flächen (13) aufweisen, in mehrere, durch die Stege (11, 12, 16, 17) separierte Teilquerschnitte (TQ_{1,2,3,4,5}) unterteilt wird, wobei zumindest ein Teil der Teilquerschnitte (TQ_{1,2,3,4,5}) unterschiedlich groß ist, so dass ein unterschiedliches Verhalten bei laminarer und turbulenter Strömung verursacht wird, wobei es bei laminarer Strömung infolge der unterschiedlichen Teilquerschnitte (TQ_{1,2,3,4,5}) zu unterschiedlichen Strömungsgeschwindigkeiten kommt, die das laminare Profil nach dem Strömungsrichter auflösen.

## Claims

1. Flow straightener for a flowmeter, in particular an ultrasonic metering device, which can be fitted into a flow pipe which is upstream of or in the flowmeter and through which the fluid to be measured flows with a main direction of flow (H), **characterized by** a number of vanes (11, 12, 16, 17), which each have surfaces (13) that are parallel to one another and, in the fitted position, run parallel to the main direction of flow (H) of the fluid to be measured, the vanes (11, 12, 16, 17) being arranged in such a way that, in the fitted position, the flow cross section (Q) of the fluid-carrying flow pipe (2) is subdivided into a number of partial cross sections (TQ_{1,2,3,4,5}), at least some of the partial cross sections (TQ_{1,2,3,4,5}) being of different sizes, such that different behavior is caused for laminar flow and turbulent flow, wherein, with laminar flow, there are different flow velocities as a result of the different partial cross sections (TQ_{1,2,3,4,5}), which flow velocities break up the laminar profile downstream of the flow straightener (9).

2. Flow straightener according to Claim 1, **characterized in that** the vanes (11, 12, 16, 17) are longer than they are wide when considered in the main direction of flow (H).

3. Flow straightener according to Claim 1 or 2, **characterized in that** the vanes (11, 12, 16, 17) have a bevel (15) on their onflow side.

4. Flow straightener according to one of the preceding claims, **characterized in that** the vanes (11, 12, 16, 17) are arranged in two or more cross-sectional planes lying one behind the other.

5. Flow straightener according to Claim 4, **characterized in that** the vanes (11, 12) arranged in planes lying one behind the other run parallel to one another, at least in certain portions.

6. Flow straightener according to Claim 5, **characterized in that** the vanes (11, 12) run parallel to one another in their middle region (11a, 12a) and the adjacent vane portions (11b, 12b) of two vanes (11, 12) lying one behind the other run at an angle to one another.

7. Flow straightener according to one of Claims 4 to 6, **characterized in that** at least one holding crosspiece (14) running substantially perpendicular to the vanes (11, 12) or vane portions (11a, 12a) that are parallel to one another is provided, to which crosspiece the vanes (11, 12) or vane portions (11a, 12a) are connected.

8. Flow straightener according to Claim 7, **characterized in that** the holding crosspiece (14) has at least over certain portions on the onflow side and/or the opposite side a sloping surface (15) running at an angle < 90° to the main direction of flow (H).

9. Flow straightener according to one of Claims 1 to 4, **characterized in that** at least some of the vanes (16, 17) are formed as concentric circles connected to at least one holding crosspiece (14).

10. Flow straightener according to one of Claims 1 to 4, **characterized in that** the vanes (11, 12) are formed straight or bent and are connected to at least one holding crosspiece (14), the straight vanes (11) being at any desired angle > 0° and < 180° to the holding crosspiece (14).

11. Flow straightener according to one of the preceding claims, **characterized in that** the vanes (11, 12, 16, 17) are accommodated in a ring (10) delimiting the flow straightener (9) on the outside.

12. Flow straightener according to one of Claims 1 to 10, **characterized in that** the vanes (11, 12) are fixed peripherally by way of two peripheral vanes (18) in the form of segments of a circle arranged opposite one another.

13. Flow straightener according to one of Claims 1 to 10, **characterized in that** peripherally straight vanes (23) are provided, which together make up a rectangular form and in the fitted position are supported on the flow pipe by way of abutting portions (18).

14. Flow straightener according to one of Claims 1 to 10, **characterized in that** at least some of the vanes end freely and, in the fitted position, lie with their ends against the flow pipe, or **in that** at least some of the vanes form a partial cross section together with the inner wall of the pipe.

15. Flow straightener according to one of the preceding claims, **characterized in that** it is a plastic injection molding.

16. Flow straightener according to one of the preceding claims, **characterized in that** it is arranged on a pipe insert (3) serving for flow measurement, in particular a reflector holder of an ultrasonic metering device.

17. Flow straightener according to Claim 16, **characterized in that** it is fitted on the pipe insert (3) by way of a latching connection or is molded on it.

18. Flowmeter, in particular an ultrasonic metering device, with a flow pipe through which the fluid to be measured flows with a main direction of flow (H), and with at least one flow straightener (9) according to one of the preceding claims inserted in the flow pipe (2).

19. Method for straightening a flow with a flow straightener (9), which is fitted in a flow pipe (2) upstream of or in a flowmeter through which a fluid to be measured is passed with a main direction of flow (H), wherein the flow cross section (Q) of the fluid-carrying flow pipe (2) is subdivided by a number of vanes (11, 12, 16, 17) of the flow straightener (3), which each have surfaces (13) that are parallel to one another and, in the fitted position, run parallel to the main direction of flow (H) of the fluid to be measured, into a number of partial cross sections (TQ_{1,2,3,4,5}) separated by the vanes (11, 12, 16, 17), wherein at least some of the partial cross sections (TQ_{1,2,3,4,5}) are of different sizes, such that different behavior is caused for a laminar flow and turbulent flow, wherein, with laminar flow, there are different flow velocities as a result of the different partial cross sections (TQ_{1,2,3,4,5}), which flow velocities break up the laminar profile downstream of the flow straightener.

## Revendications

1. Dispositif de redressement d'écoulement destiné à un débitmètre, notamment un débitmètre à ultrasons, à introduire dans un tube d'écoulement (2) en amont ou à l'intérieur d'un débitmètre à travers lequel le fluide à mesurer s'écoule dans une direction d'écoulement principale (H), **caractérisé par** plusieurs nervures (11, 12, 16, 17) qui présentent respectivement des surfaces (13) s'étendant parallèlement les unes aux autres et parallèlement à la direction d'écoulement principale (H) du fluide à mesurer en position montée, dans lequel les nervures (11, 12, 16, 17) sont disposées de manière à ce que, en position montée, la section transversale d'écoulement (Q) du tube d'écoulement (2) acheminant le fluide soit divisée en plusieurs sections transversales partielles (TQ_{1,2,3,4,5}), dans lequel au moins une partie des sections transversales partielles (TQ_{1,2,3,4,5}) présente des dimensions différentes de manière à ce qu'un comportement différent soit provoqué lors d'un écoulement laminaire et turbulent, dans lequel il se produit un écoulement laminaire à des débits différents, en raison des sections transversales partielles (TQ_{1,2,3,4,5}) différentes qui déclenchent le profil laminaire en aval du dispositif de redressement d'écoulement (9).

2. Dispositif de redressement d'écoulement selon la revendication 1, **caractérisé en ce que** les nervures (11, 12, 16, 17) sont plus longues que larges lorsqu'on les observe dans la direction d'écoulement principale (H).

3. Dispositif de redressement d'écoulement selon la revendication 1 ou 2, **caractérisé en ce que** les nervures (11, 12, 16, 17) présentent un biseau (15) du côté du flux entrant.

4. Dispositif de redressement d'écoulement selon l'une quelconque des revendications précédentes, **caractérisé en ce que** les nervures (11, 12, 16, 17) sont disposées dans deux plans transversaux consécutifs ou plus.

5. Dispositif de redressement d'écoulement selon la revendication 4, **caractérisé en ce que** les nervures (11, 12) disposées dans des plans consécutifs s'étendent parallèlement les unes aux autres au moins par sections.

6. Dispositif de redressement d'écoulement selon la revendication 5, **caractérisé en ce que** les nervures (11, 12), dans leur région médiane (11a, 12a), s'étendent parallèlement les unes aux autres et **en ce que** les sections de nervures (11b, 12b) adjacentes à celles-ci de deux nervures (11, 12) consécutives s'étendent en formant un angle l'une par rapport à l'autre.

7. Dispositif de redressement d'écoulement selon l'une quelconque des revendications 4 à 6, **caractérisé en ce qu'**il est prévu une nervure de maintien (14) s'étendant sensiblement perpendiculairement aux nervures (11, 12) ou aux sections de nervures (11a, 12a) parallèles les unes aux autres, à laquelle sont reliées les nervures (11, 12) ou les sections de nervures (11a, 12a).

8. Dispositif de redressement d'écoulement selon la revendication 7, **caractérisé en ce que** la nervure de maintien (14) présente sur la face tournée vers le flux et/ou la face opposée, au moins par sections, une surface inclinée (15) s'étendant en formant un angle < 90° par rapport à la direction d'écoulement principale (H).

9. Dispositif de redressement d'écoulement selon l'une quelconque des revendications 1 à 4, **caractérisé en ce qu'**au moins une partie des nervures (16, 17) est réalisée sous la forme de cercles concentriques reliés à au moins une nervure (14).

10. Dispositif de redressement d'écoulement selon l'une quelconque des revendications 1 à 4, **caractérisé en ce que** les nervures (11, 12) présentent des formes droites ou incurvées et sont reliées à au moins une nervure de maintien (14), dans lequel les nervures droites (11) sont disposées en formant un angle quelconque > 0° et < 180° par rapport à la nervure de maintien (14).

11. Dispositif de redressement d'écoulement selon l'une quelconque des revendications précédentes, **caractérisé en ce que** les nervures (11, 12, 16, 17) sont reçues dans un anneau (10) délimitant le dispositif de redressement d'écoulement (9) le long de la face extérieure.

12. Dispositif de redressement d'écoulement selon l'une quelconque des revendications 1 à 10, **caractérisé en ce que** les nervures (11, 12) sont fixées du côté du bord par l'intermédiaire de deux nervures de bord (18) en forme d'arc de cercle et disposées en face les unes des autres.

13. Dispositif de redressement d'écoulement selon l'une quelconque des revendications 1 à 10, **caractérisé en ce qu'**il est prévu des nervures droites (23) du côté des bords, qui se complètent de préférence pour donner une forme rectangulaire et qui sont supportées, en position montée, sur le tube d'écoulement par l'intermédiaire de sections de support (18).

14. Dispositif de redressement d'écoulement selon l'une quelconque des revendications 1 à 10, **caractérisé en ce qu'**au moins une partie des nervures présentent une extrémité libre et, en position montée, reposent par leurs extrémités sur le tube d'écoulement, ou **en ce qu'**au moins une partie des nervures forment en association avec la paroi interne du tube une section transversale partielle.

15. Dispositif de redressement d'écoulement selon l'une quelconque des revendications précédentes, **caractérisé en ce qu'**il s'agit d'une pièce en matière plastique moulée par injection.

16. Dispositif de redressement d'écoulement selon l'une quelconque des revendications précédentes, **caractérisé en ce qu'**il est disposé sur un insert de tube (3) utilisé pour mesurer le débit, notamment un support de réflecteur d'un appareil de mesure à ultrasons.

17. Dispositif de redressement d'écoulement selon la revendication 16, **caractérisé en ce qu'**il est enfiché par l'intermédiaire d'une liaison par encliquetage sur l'insert de tube (3) ou **en ce qu'**il est moulé par injection sur celui-ci.

18. Appareil de mesure de débit, notamment appareil de mesure à ultrasons, comportant un tube d'écoulement à travers lequel s'écoule le fluide à mesurer avec une direction d'écoulement principale (H), et comportant également au moins un dispositif de redressement d'écoulement (9) selon l'une quelconque des revendications précédentes, inséré dans le tube d'écoulement (2).

19. Procédé d'orientation d'un écoulement au moyen d'un dispositif de redressement d'écoulement (9) qui est introduit dans un tube d'écoulement (2) en amont ou à l'intérieur d'un débitmètre à travers lequel un fluide à mesurer est acheminé dans une direction d'écoulement principale (H), dans lequel la section transversale d'écoulement (Q) du tube d'écoulement (2) acheminant le fluide est subdivisée par de multiples nervures (11, 12, 16, 17) du dispositif de redressement d'écoulement (3), qui présentent respectivement des surfaces (13) s'étendant parallèlement les unes aux autres et parallèlement à la direction d'écoulement principale (H), en position de montage, du fluide à mesurer, en de multiples sections transversales partielles (TQ_{1,2,3,4,5}) séparées par les nervures (11, 12, 16, 17), dans lequel au moins une partie des sections transversales partielles (TQ_{1,2,3,4,5}) présentent des dimensions différentes, de manière à ce qu'un comportement différent soit provoqué par un écoulement laminaire et turbulent, dans lequel il se produit un écoulement laminaire conduit à des débits différents en raison des sections transversales partielles (TQ_{1,2,3,4,5}) différentes, qui déclenchent le profil laminaire en aval du dispositif de redressement d'écoulement.
